# EUROPEAN PATENT APPLICATION

(11) **EP 4 607 200 A1**
(43) Date of publication of application: **27.08.2025**
(21) Application number: 25000021.3
(22) Date of filing: 24.02.2025
(51) Int. Cl.: G01N 35/00, B01L 3/00, B25J 15/08, G01N 35/02, B25J 15/00, B25J 15/02, B25J 17/02

(54) **A LINEAR GRIPPER AND A METHOD OF MOVING A MICROTITER PLATE USING A ROBOT ARM COMPRISING SAID GRIPPER**

(30) Priority: 26.02.2024 NL 1044826
(71) Applicant: Enzyscreen B.V., 2105 MB Heemstede (NL)
(72) Inventor: Servaes, Joordens, 2105 MB Heemstede (NL)

(57) **Abstract**

A gripper for moving a microtiter plate (190) using a robot arm (100) comprises a finger bodies (310), finger cantilevers (330), and resilient strips (370) so as to accommodate for inacurracies of the robot arm (100). The invention also relates to a method for moving a microtiter plate (190) with a robot arm (100) with improved reliability comprises the use of said gripper comprising two fingers (300) comprises independent of the other finger (300) a primary element chosen from i) a protrusion and ii) a cut-out capable of receiving the protrusion, and the MTP (190) comprising a secondary element that is the other of the primary element, and grabbing the plate (335) such that the primary and secondary element engage.

## Description

The present invention relates to a linear gripper for moving a microtiter plate, said gripper comprising a first finger and a second finger, said two fingers capable of being in a first position of the gripper wherein said two fingers are relatively far apart and a second position of the gripper in which said two fingers are relatively close;
wherein each of said two fingers comprises independent of the other finger a primary element chosen from i) a protrusion and ii) a cut-out capable of receiving the protrusion, the primary element of the first finger facing the second finger and the primary element of the second finger facing the first finger.

Microtiter plates (MTPs) are used to grow prokaryotic cells or more typically eukaryotic cells such as HEK-cells, CHO-cells etc.. The MTPs comprise an array of wells, typically 24 or 96, each well comprising a bottom and upright walls which together define a lumen in which a liquid cell growth medium is provided. At the top of a MTP, the wells are open. While growing cells in a microtiter plate, the MTP is provided with a cover. MTPs are highly standardized with respect to their dimensions which should facilitate moving them automatically.

Generally speaking, grabbing items with a robot arm comprising a gripper is standard fare. Laboratory automation tries to exploit the availability of relatively light robot arms which, however, compared to industrial robots suffer with respect to positioning accuracy. Such light robot arms are arranged to be equipped with linear grippers (as opposed to angular grippers). The origin of the positional errors is manyfold, including flexing of the robot arm, distance of the gripper from the base of the arm, actuator inaccuracy, and not grabbing the MTP with its center of gravity close to the centerline through the gripper running parallel with the direction of movement from the first position of the gripper to the second of the gripper. This is compounded by the fact that the microtiter plate at the first location may not be exactly in the location expected by the controller of the robot arm. Any of this may result in unsuccessful grabbing of the microtiter plate. In addition, even if the gripper successfully grabs the microtiter plate but not at spots on the upright side walls where the MTP is supposed to be held by the gripper, this may result in increased inaccurate positional placement of the MPT at the second location. This may interfere with further operations. While human laboratory workers are flexible and can address this situation without much further thought, for automation overcoming this problem is a barrier to wide-scale adoption. Automation is only attractive if MTPs can be moved in a highly reliable manner. An error should not ruin an expensive or laborious experiment, or delay it.

To provide improved accuracy when handling microtiter plates even with a not highly accurate robot arm or if the microtiter plate is not precisely at the first location where the MTP is expected, it is known to use a microtiter plate comprising notches. Projections (tabs) on the fingers can engage the notches of the microtiter plate to hold is securely and at a specified location of the plate. In case a microtiter plate is held in place at a location, e.g. because it is located in a nest or surrounded by upright protrusions that act as stops against horizontal movement, inaccuracies of the robot arm may cause an operation to pick up the microtiter plate to fail. This could be because a system controlling the robot arm detects a problem such as excessive force exerted by the gripper.

The object of the present invention is to provide an improved linear gripper that is suitable for gripping a microtiter plate (MTP) contained at a specified location of the MTP and better at accommodating for the above positioning issues, so as to allow the MTP to be reliably moved to a second location where it can be positioned accurately.

To this end, the gripper according to the present invention, the fingers of the gripper comprise
- a finger body having a proximal end and a distal end, and finger bodies of opposite fingers mounted movably with respect to each other, and
- a finger cantilever, wherein
   - said finger cantilever is hingeably attached to the finger body at a location of the finger body away from the distal end of the finger body and the finger cantilever comprises a distal section that extends beyond the distal end of the finger body,
   - the finger body of a finger is located between the finger cantilever of said finger and the opposite finger to serve as a stop for said finger cantilever, and
   - the distal section of the finger cantilever is provided with the primary element; and the gripper comprises a member capable of forcing the finger cantilevers towards the finger bodies;
wherein
- the finger cantilever comprises two resilient strips between the primary element and the hinge, said resilient strips being mounted parallel with respect to each other and allowing movement of the primary element in a direction transverse to a plane of relative movement of the finger bodies.

Such a linear gripper allows for a wider range of positional inaccuracy when picking up a MTP at the first position of the MTP. It is also helps to prevent exerting excessive force on the MTP that may damage the MTP or even the gripper itself. The gripper according to the present invention can be considered a hybrid of an active linear gripper and a passive angular gripper. The passive angular gripper allows movement in two transverse directions, improving the reliability of grabbing the MTP while the position of the MTP relative to the robot arm is accurately known after the MTP has been lifted from an MTP well.

By changing the distance between the finger bodies, the two fingers can be moved relatively far apart and relatively close for performing a gripper operation and moving a microtiter plate. Typically the fingers will be identical. The member is typically a spring, such as a coil spring. The spring may connect the distal finger cantilever sections or more than one spring may be used which may be connected to the finger body of said finger or of the opposite finger body.

The gripper according to the present invention can be used with a rectangular microtiter plate comprising a plurality of wells and two pairs of opposite upright walls extending from a base, wherein at at least one of the upright walls of a pair of opposite upright walls the microtiter plate is provided with an element chosen from i) a cut-out, and ii) a protrusion, the center of the element being at a distance of at least 5 mm from the base.

Preferably the element comprises a contact surface that is at an angle typically between 25° and 65° to a plane perpendicular to base and in a plane parallel to the base, preferably between 35°C and 55° such as 45°. Typically the element comprises a second contact surface facing the contact surface (which is the first contact surface), said second surface being at a corresponding angle that is typically between 155 and 115°, preferably between 125°C and 145° such as 135°. The contact surfaces may be curved or flat.

The center of the element is preferably 12-25 mm from the top of the microtiter plate. This allows for secure grabbing even if the MTP is provided with a cover.

According to a preferred embodiment, the element comprises a further contact surface at an angle to the base of the microtiter plate and in a plane perpendicular to the base and extending along the upright walls comprising the element.

This allows for more precise holding of the plate, and guiding it in a vertical direction when grabbed with a gripper in accordance with the invention. By knowing at what height the plate has been gripped, it can be placed at the second location more precisely, with less risk of dropping the plate which could result in undesirable splashing of liquid content in the MTP. Also, this reduces the risk that the MTP is held with a main surface not horizontal, which would result in less accurate positioning at the second location. Positioning of the MTP may even fail if the second location is a dedicated surface recess.

Preferably the further contact surface is at an angle typically between 25° and 65°, preferably between 35°C and 55° such as 45°. Typically the element comprises a second further contact surface facing the further contact surface (which is the first contact surface), said second further surface being at a corresponding angle that is typically between 155 and 115°, preferably between 125°C and 145° such as 135°. The contact surfaces may be curved or flat.

The invention also relates to a method of moving a microtiter plate using a robot arm comprising a linear gripper according to the invention,
wherein the microtiter plate is a rectangular microtiter plate comprising a plurality of wells and two pairs of opposite upright walls extending from a base; and
wherein the method comprises the steps of
   - positioning the gripper using the arm over the microtiter plate with the fingers in the first position of the gripper,
   - moving the fingers towards the second position so as to grab the microtiter plate present at a first location by clamping against two opposite upright walls of the microtiter plate,
   - moving said microtiter plate from said first location to a second location, and
   - releasing the microtiter plate at said second location by moving the fingers to the first position; and
wherein each of said two fingers comprises independent of the other finger a primary element chosen from i) a protrusion and ii) a cut-out capable of receiving the protrusion, the primary element of the first finger facing the second finger and the primary element of the second finger facing the first finger;
wherein the microtiter plate comprises at at least two opposite upright walls a secondary element for engaging the gripper, said secondary element being for each of the fingers the other of i) the protrusion and ii) the cut-out, so as to allow the primary element of a finger to engage the corresponding secondary element of the microtiter plate;
wherein at least one of the protrusion and the cut-out comprises a contact surface for guiding the other element while moving the gripper to the second position of the gripper and said contact surface is inclined to the upright wall facing the primary element.

The resilient strips of the cantilevers allow the microtiter plate and the element of the gripper to move relative to one another so as to more accurately hold (clamp) the microtiter plate at predefined locations at the opposite upright side walls of the microtiter plate. This corrects for inadvertent minor (e.g. < 4 mm) incorrect positioning of the gripper by the robot arm with respect to the MTP or in case the MTP is not exactly at the expected location.

The angle of the contact surface is typically between 25° and 65° to a plane perpendicular to the direction of movement from the first position of the gripper to the second position of the gripper and in a plane parallel to the horizontal, preferably between 35°C and 55° such as 45°. Typically the element comprises a second contact surface facing the contact surface (which is the first contact surface), said second surface being at a corresponding angle that is typically between 155 and 115°, preferably between 125°C and 145° such as 135°. The contact surfaces may be curved or flat.

If the cut-out is a through-hole in a plate, the protrusion has to provide the contact surface. If the cut-out is a recess, the contact surface may be provided by the protrusion and/or the recess.

It is preferred that in the method according to the invention a gripper is used as defined in the claims.

According to a preferred embodiment, the primary element is the cut-out, and the microtiter plate comprises as the secondary elements the protrusions for the cut-outs of the fingers.

This allows the gripper to be used to handle both microtiter plates with protrusion and conventional ones without protrusion (and also covers for MTPs), albeit in the latter case the positioning advantage is lost.

According to a preferred embodiment, the protrusion is a recessed plate protrusion where the protrusion is present in a recess in an upright wall of the microtiter plate and the cut-outs of the fingers are cut-outs in finger protrusions, wherein when holding the microtiter plate the finger protrusions are received in the recesses in the upright walls of the microtiter plate.

This allows the gripper to grab an MTP provided with a cover. This also avoids the protrusions of the microtiter plate stick out in an inconvenient manner when the MTP is handled manually. To avoid complications with other devices, such as a pipetting station, the protrusions will preferably not protrude beyond the standard MTP footprint dimensions of 86 x 128 mm. The finger protrusions are advantageously flat-faced protrusions, the flat-face capable of engaging the upright wall of an MTP without protrusions.

According to a preferred embodiment, the gripper comprises a pad of non-slip material located between the distal end of the gripper and the cut-out for the protrusion and the upright wall of the microtiter plate provided with the protrusion comprises a recess for the pad, wherein the thickness of the pad and the depth of said recess for the pad are chosen such that the protrusion is capable of being received by the cut-out for the protrusion before the pad contacts the upright wall.

The pad of non-slip material is for example a piece of elastic rubber. Thus the gripper can be used to more reliably pick up an item without a protrusion, such as a cover for the MTP or another conventional microtiter plate.

According to a preferred embodiment, the contact surface is a first contact surface for guiding the plate relative to the gripper in a direction with a horizontal component and there is at least a further contact surface for guiding the plate relative to the gripper in a direction with a vertical component.

This allows for more precise holding of the plate. By knowing at what height the plate has been gripped, it can be placed at the second location more precisely, with less risk of dropping the plate which could result in undesirable splashing of liquid content in the MTP. Also, this reduces the risk that the MTP is held with its bottom surface not horizontal, which would result in less accurate positioning at the second location.

A protrusion that is both the first contact surface and the second contact surfaces is conveniently provided for by a protrusion having a conical or pyramidal shape.

In the present application, the term "in a direction with a horizontal component" means that the horizontal component is larger than the vertical component, if present, preferably at least 2x that of the vertical component. Similarly, the term "in a direction with a vertical component" means that the vertical component is larger than the horizontal component, if present, preferably at least 2x that of the horizontal component.

The angle of the further contact surface is typically between 25° and 65° to a plane perpendicular to the direction of movement from the first position of the gripper to the second position of the gripper and in a vertical plane, preferably between 35°C and 55° such as 45°. Typically the element comprises a second further contact surface facing the further contact surface (which is the first further contact surface), said second further contact surface being at a corresponding angle that is typically between 155 and 115°, preferably between 125°C and 145° such as 135°. The further contact surfaces may be curved or flat.

According to a preferred embodiment, the gripper is resiliently flexible in a direction parallel to a plane perpendicular to the direction of movement from the first position of the gripper to the second position of the gripper.

This allows the gripper and the MTP to be moved relative to each other to grab the MTP at predefined spots even if the MTP is held fixed in a particular location (e.g. because it is in a dedicated surface recess designed to prevent horizontal movement of the MTP).

The present invention will now be illustrated with reference to the drawings, where
Fig. 1 shows perspective view of a robot arm comprising a gripper and a microtiter plate (MTP) to be moved;
Fig. 2A shows a perspective view of the microtiter plate of Fig. 1; ;
Fig. 2B shows a cross-sectional view of the microtiter plate of Fig. 2A;
Fig. 3A shows a perspective view of the gripper of Fig. 1;
Fig. 3B show a cross-sectional bottom view of the gripper of Fig. 1;
Figs. 4A to 4D illustrate in side view the process of grabbing the MTP with the gripper;
Fig. 5 shows a perspective view of an alternative gripper;
Figs. 6A to 6C illustrate in side view the process of grabbing the MTP with the gripper of Fig. 5' and
Fig. 7 shows a sideview of a further alternative gripper.

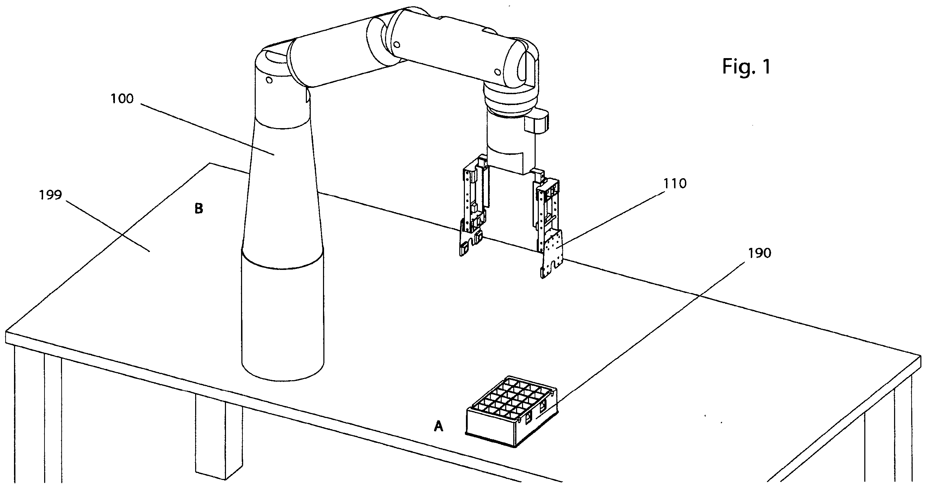

Fig. 1 shows a robot arm 100 mounted a support 199 (table), said robot arm 100 comprising a gripper 110. It also shows a microtiter plate (MTP) 190 to be moved from a first location A to a second location B.

In the present invention the gripper 110 and the MTP 190 are designed to cooperate with each other so as to overcome positional inaccuracies in the order of a few millimeters maximum (e.g. ±4 mm.

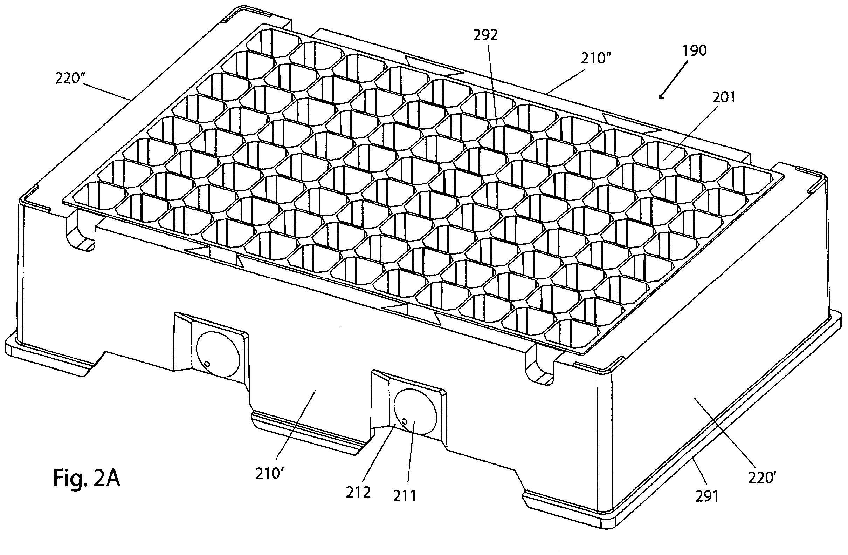

Fig. 2A shows a perspective view of the microtiter plate 190 of Fig. 1, with wells 201 and a first pair of upright sidewalls 210', 210" and a second pair of upright sidewalls 220', 220". The MTP comprises a base 291 from which the upright sidewalls extend and a top surface 292. The upright sidewalls 210', 210" are each provided with two conical protrusions 211, here frusto-cones located in plate recesses 212. The maximum diameter of the conical protrusions 211 is 8 mm, allowing for a horizontal correction of 4 mm in either direction. The protrusions 211 will engage with the gripper 110 as will be discussed below.

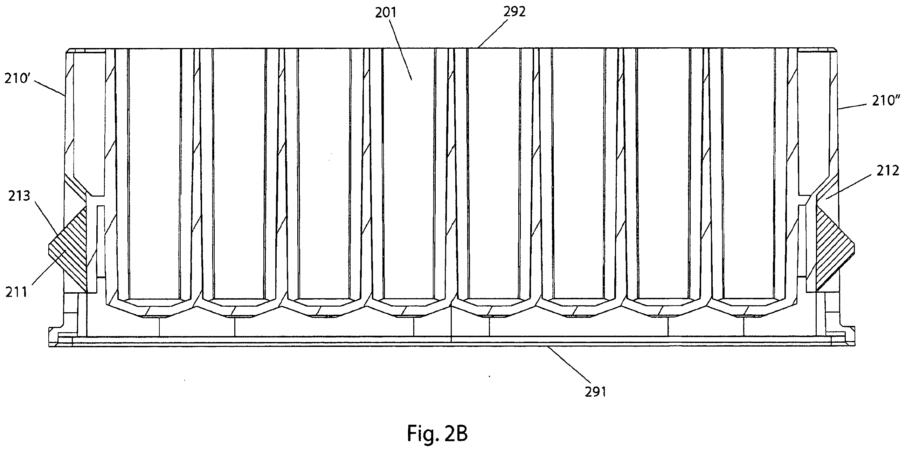

Fig. 2B shows a cross-sectional view of the microtiter plate of Fig. 2A with the protrusions 211 in the plate recesses 212. The protrusions have smooth contact surfaces 213 for the gripper as will be discussed below. In the embodiment discussed here, the protrusions 211 have a center line parallel to the base plane of the MTP 190 and the half-angle of the cone is 45° with respect to the center line. The center line extends parallel to the second upright walls 220.

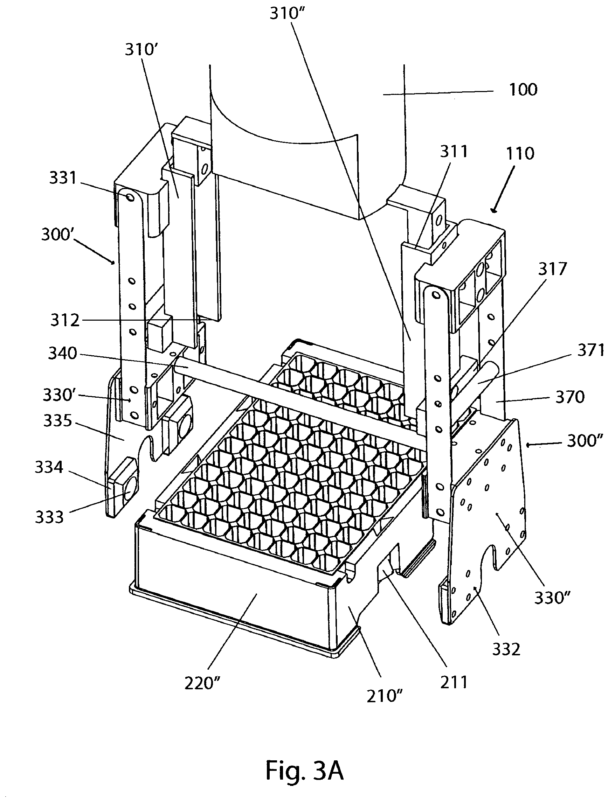

Fig. 3A shows a perspective view of the gripper 110 of the robot arm 100 of Fig. 1 in detail. The gripper 110 comprises a first finger 300' and a second finger 300", said two fingers 300 capable of being in a first position of the gripper wherein said two fingers are relatively far apart and a second position of the gripper in which said two fingers are relatively close, as is known in the art.

The fingers 300', 300" comprise a finger body 310', 310" respectively, said finger bodies having a proximal end 311 and a distal end 312. Each finger body 310 is provided at a side of the finger body 310 facing away from the other finger body a finger cantilever 330', 330". The finger cantilever 330 is hingably about an axle 331 attached to the finger body at a location of the finger body away from the distal end 312 of the finger body and the finger cantilever comprises a distal section 332 that extends beyond the distal end 312 of the finger body 310.

The distal section 332 of the finger cantilever 330 is provided with a cut-out 333 (a primary element; here two) for receiving the protrusions 211 (secondary elements). More specifically the cut-outs 333 are provided in (plastic) chamfered bodies 334 mounted on a (metal) plate 335 and have 45° contact surfaces 313 to cooperate with the contact surfaces 213 of the MTP.

For an even thinner gripper, that is even more capable of grabbing an MTP even if other objects (such as other MTPs) are close by, the plate 335 may be provided with holes as cut-outs 333. The finger body 310 is located between the finger cantilever 330 and the other finger 300 to serve as a stop for the finger cantilever 330. The gripper 110 comprises a spring 340 (a member) connecting the two finger cantilevers 330', 330". Generally speaking for the invention it is contemplated that in addition or alternatively springs 340 may connect the cantilever 330 to the finger body 310 they are hingedly connected to. This centers the finger cantilevers, rendering an improved positional accuracy.

In the embodiment discussed here, each finger cantilever 330 comprises two resilient (metal) strips 370 that allow for accommodation of relative positioning inaccuracies in a horizontal direction (parallel to the upright walls 210). In the embodiment shown here, the strips 370 are connected via a rigid bar 371 and the finger body 310 comprises a stop block 317 for said rigid bar 371. Thus, in the embodiment shown here with the spring 340 connecting the two finger cantilevers 330, if the finger bodies 310', 310" are moved closer together than the width of an MTP, the force exerted on a MTP is not determined by the distance between said the finger bodies 310', 310". Also, this allows for accommodation of relative positioning inaccuracies in a horizontal direction (parallel to the upright walls 220), which may be convenient if the MTP has to be put at a physically defined place, such as a recess with a chamfered upper section to guide the MTP to a well-defined location.

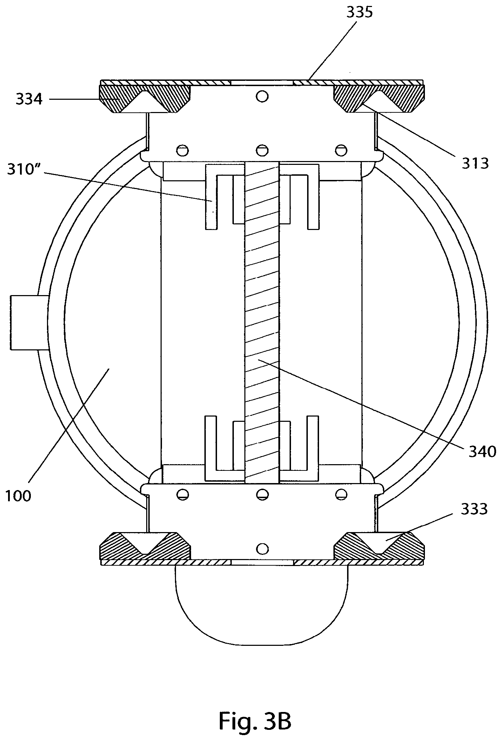

Fig. 3B shows a cross-sectional bottom view of the gripper of Fig. 3A, and shows the conical cut-outs 333 of the gripper fingers for the protrusions 211 of the MTP.

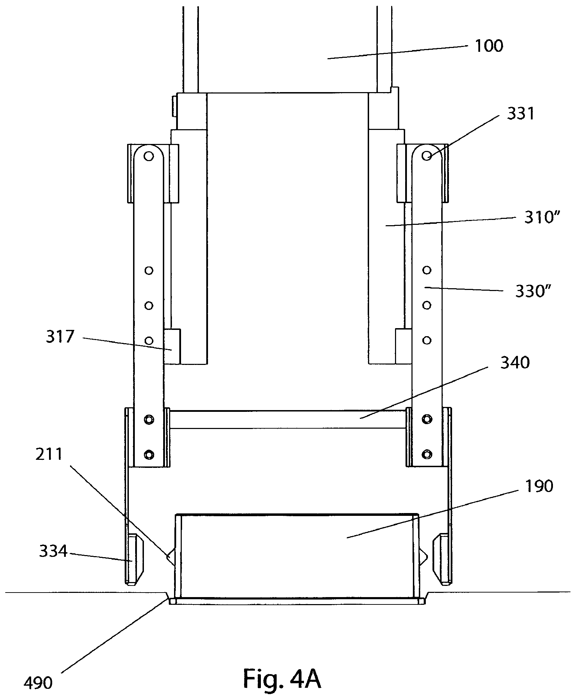

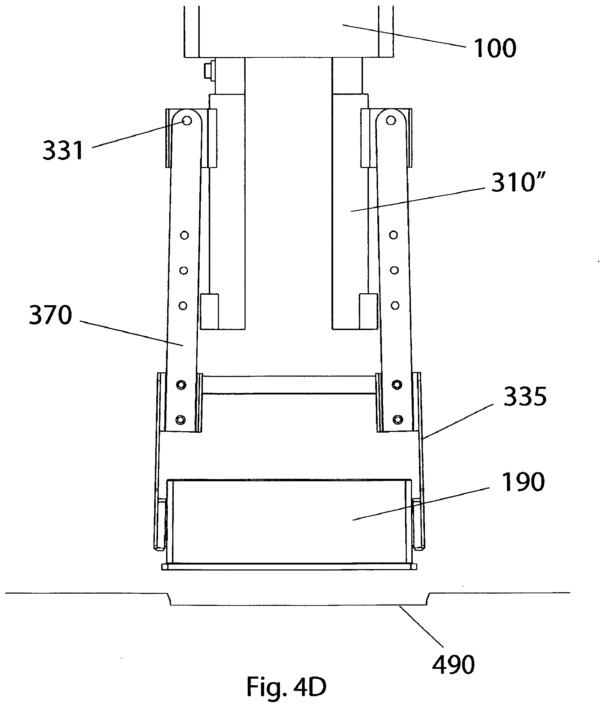

The method according to the invention will now be illustrated with reference to Fig. 4A-4D. A microtiter plate (MTP) 190 is shown in a recessed surface 490 to represent a case where the MTP to be moved can't move horizontally when grabbed by an inaccurately positioned gripper 110.

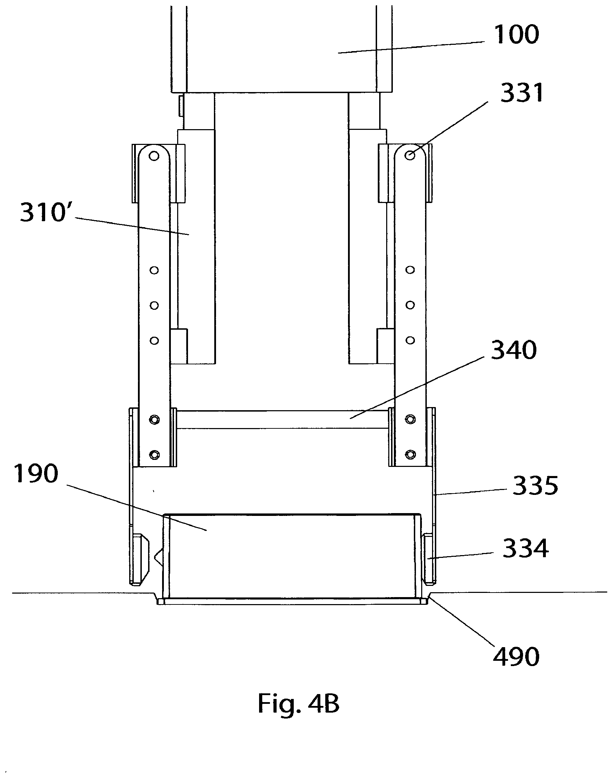

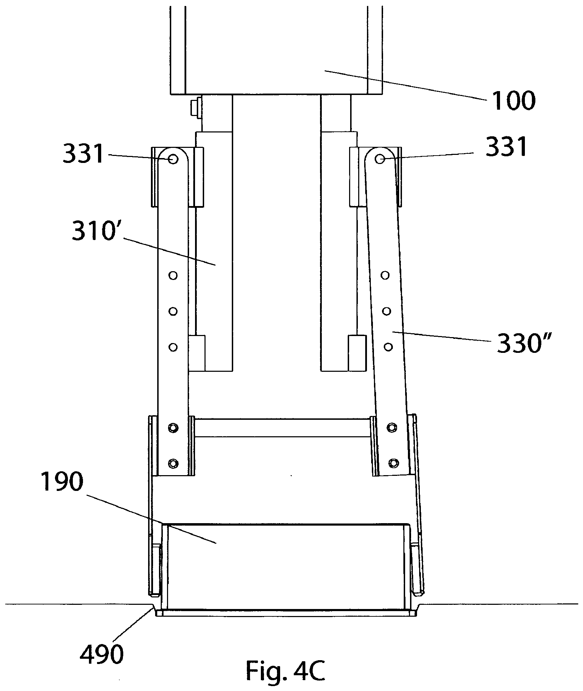

If the gripper 110 is positioned inaccurately (Fig. 4A), closing the gripper 110 will cause one finger 300" to contact the MTP (Fig. 4B). Because it is held in the recessed surface 490, further closing of the gripper 110 will cause the finger cantilever 330" to pivot (Fig. 4C). Any minor misalignment in a direction perpendicular to the drawing will be accommodated for by the flexible and resilient strips 370. Upon lifting the MTP the spring 340 will cause the finger cantilevers 330', 330" to close. The MTP is held at a precisely known manner by the gripper 110, facilitating its accurate placement at location B.

When the reverse movement is desired, the chamfered recessed surface 490 may guide the MTP into the recess in the surface. To this end, it is advantageous to first close the gripper further (moving the gripper bodies 310 closer to each other) before moving the MTP down in the recess, as this will allow for a substantial horizontal movement in the plane of the drawing.

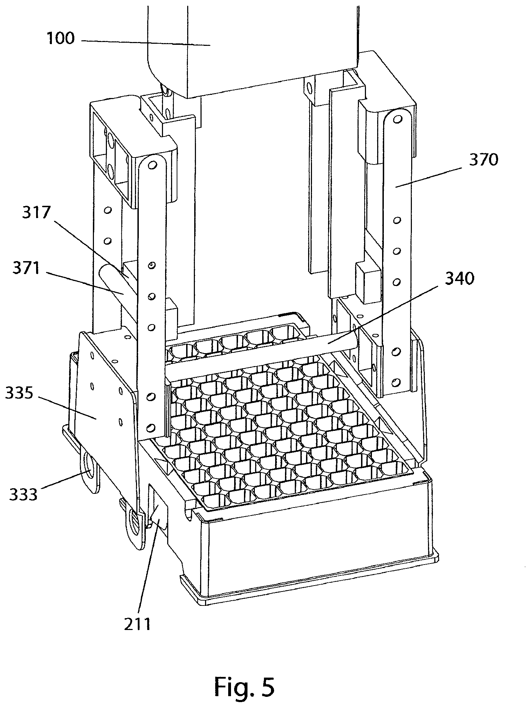

To demonstrate how the above gripper 110 accommodates for inaccurate relative positioning of the gripper with respect to the MTP in a direction parallel to the upright walls 210", reference will be made to Fig. 5 showing a perspective view of an alternative gripper 110. The difference is that instead of the conical cut-out 333 in chamfered bodies 334, the cut-outs 333 are through-holes 333 in the plate 335, allowing you to see what is going in the method steps below. Distal end portions of the plate 335 have been shaped so as to allow them to be received in the plate recesses 212.

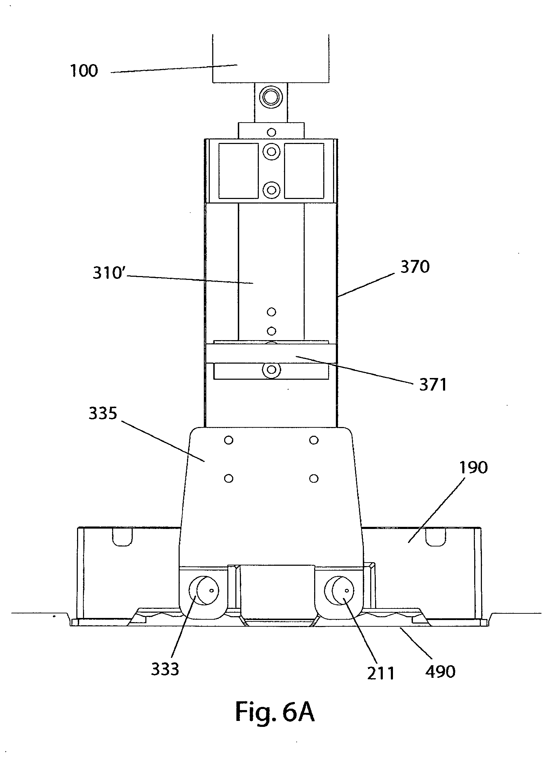

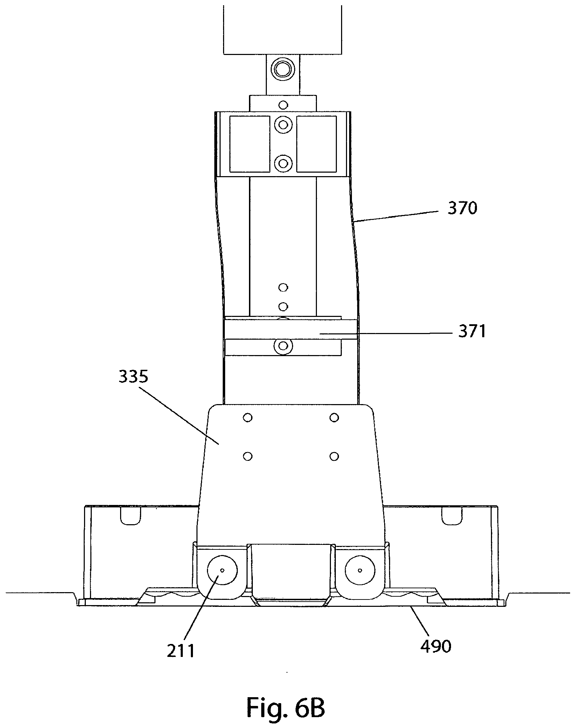

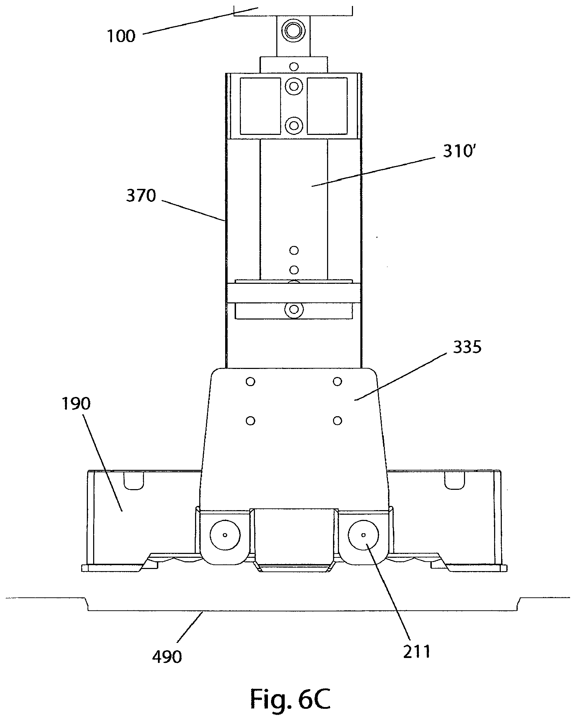

Figs. 6A to 6C illustrate in side view the process of grabbing the MTP with the gripper 110 of Fig. 5. In Fig. 6A it can be seen that the gripper 110, in particular the through-hole 333 is not aligned with the protrusions 211 of the MTP. When the gripper 110 is closed, the resilient strips 370 bend to accommodate for the inaccuracy with the conical protrusion 211 and the through-hole 333 slidingly cooperating and the MTP is securely held (Fig. 6B). When MTP is lifted, the resilient strips 370 take their original (straight) shape (Fig. 66) and the MTP is at held at known spots on the MTP and at a known location with respect to the distal end of the robot arm 100.

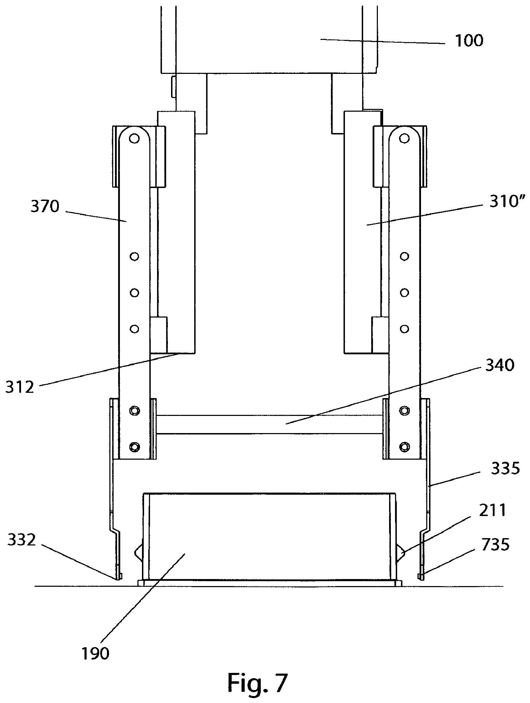

Fig. 7 shows a sideview of a further alternative gripper similar to the gripper of Fig. 5. In this embodiment the plate 335 is provided with an anti-slip pad 735. This gripper 110 is more versatile in that it can be used to pick up MTP covers and MTP without protrusions 211. It will be desired to avoid that the pad 735 impedes the cooperation of the protrusions 211 and the through-holes. This can be achieved if the diameter of the cut-outs 333 is smaller than the base of the protrusions 211.

## Claims

1. A linear gripper (110) for moving a microtiter plate (190), said gripper comprising a first finger (300') and a second finger (300"), said two fingers (300', 300") capable of being in a first position of the gripper (110) wherein said two fingers (300', 300") are relatively far apart and a second position of the gripper (110) in which said two fingers (300', 300") are relatively close; wherein each of said two fingers (300', 300") comprises independent of the other finger (300) a primary element chosen from i) a protrusion and ii) a cut-out capable of receiving the protrusion, the primary element of the first finger (300') facing the second finger (300") and the primary element of the second finger (300") facing the first finger (300');
wherein the fingers of the gripper (110) comprise
- a finger body (310) having a proximal end (311) and a distal end (312), and finger bodies (310) of opposite fingers mounted movably with respect to each other, and
- a finger cantilever (330), wherein
- said finger cantilever (330) is hingeably attached to the finger body (310) at a location of the finger body (310) away from the distal end (312) of the finger body (310) and the finger cantilever (330) comprises a distal section (332) that extends beyond the distal end (312) of the finger body (310),
- the finger body (310) of a finger is located between the finger cantilever (330) of said finger and the opposite finger to serve as a stop for said finger cantilever (330), and
- the distal section (332) of the finger cantilever (330) is provided with the primary element; and
the gripper (110) comprises a member capable of forcing the finger cantilevers (330) towards the finger bodies (310);
wherein
- the finger cantilever (330) comprises two resilient strips (370) between the primary element and the hinge, said resilient strips (370) being mounted parallel with respect to each other and allowing movement of the primary element in a direction transverse to a plane of relative movement of the finger bodies (310).

2. A method of moving a microtiter plate (190) using a robot arm (100) comprising a linear gripper according to the invention,
wherein the microtiter plate (190) is a rectangular microtiter plate (190) comprising a plurality of wells and two pairs of opposite upright walls (210) extending from a base (291); and
wherein the method comprises the steps of
- positioning the gripper (110) using the arm over the microtiter plate (190) with the fingers in the first position of the gripper (110),
- moving the fingers towards the second position so as to grab the microtiter plate (190) present at a first location by clamping against two opposite upright walls (210) of the microtiter plate (190),
- moving said microtiter plate (190) from said first location to a second location, and
- releasing the microtiter plate (190) at said second location by moving the fingers to the first position; and
wherein each of said two fingers (300', 300") comprises independent of the other finger a primary element chosen from i) a protrusion and ii) a cut-out capable of receiving the protrusion, the primary element of the first finger (300') facing the second finger (300") and the primary element of the second finger (300") facing the first finger (300');
wherein the microtiter plate (190) comprises at at least two opposite upright walls (210) a secondary element for engaging the gripper (110), said secondary element being for each of the fingers the other of i) the protrusion and ii) the cut-out, so as to allow the primary element of a finger to engage the corresponding secondary element of the microtiter plate (190);
wherein at least one of the protrusion and the cut-out comprises a contact surface for guiding the other element while moving the gripper (110) to the second position of the gripper (110) and said contact surface is inclined to the upright wall facing the primary element.

3. The method according to claim 2, wherein the primary element is the cut-out, and the microtiter plate (190) comprises as the secondary elements the protrusions for the cut-outs of the fingers.

4. The method according to claim 3, wherein the protrusion is a recessed plate protrusion where the protrusion is present in a recess in an upright wall of the microtiter plate (190) and the cut-outs of the fingers are cut-outs in finger protrusions, wherein when holding the microtiter plate (190) the finger protrusions are received in the recesses in the upright walls (210) of the microtiter plate (190).

5. The method according to any of the claims 2 to 4, wherein the gripper (110) comprises a pad (735) of non-slip material located between the distal end (312) of the gripper (110) and the cut-out for the protrusion and the upright wall of the microtiter plate (190) provided with the protrusion comprises a recess for the pad (735), wherein the thickness of the pad (735) and the depth of said recess for the pad (735) are chosen such that the protrusion is capable of being received by the cut-out for the protrusion before the pad (735) contacts the upright wall.

6. The method according to any of the claims 2 to 5, wherein the contact surface is a first contact surface for guiding the plate relative to the gripper in a direction with a horizontal component and there is at least a further contact surface for guiding the plate relative to the gripper (110) in a direction with a vertical component.

7. The method according to any of the claims 2 to 6, wherein the gripper (110) is resiliently flexible in a direction parallel to a plane perpendicular to the direction of movement from the first position of the gripper (110) to the second position of the gripper (110).
